# EUROPÄISCHE PATENTANMELDUNG

(11) **EP 4 852 177 A1**
(43) Veröffentlichungstag der Anmeldung: **09.12.2026**
(21) Anmeldenummer: 26171161.8
(22) Anmeldetag: 08.04.2026
(51) Int. Cl.: H01M 50/249, H01M 10/625, H01M 10/6556, H01M 10/6557, H01M 50/35, H01M 50/204, H01M 50/342, H01M 50/367, H01M 50/375

(54) **BATTERIEGEHÄUSE, INSBESONDERE FÜR EIN ELEKTRISCH BETRIEBENES FAHRZEUG**

(30) Priorität: 04.06.2025 DE 102025121861; 16.07.2025 DE 102025127888
(71) Anmelder: Purem GmbH, 66539 Neunkirchen (DE)
(72) Erfinder: Weller, Bernd, Durlangen (DE); Grün, Matthias, Altbach (DE); Berkemer, Frank, Eningen u. A. (DE); Neumann, Felix, Aichwald (DE)
(74) Vertreter: Ruttensperger Lachnit Trossin Gomoll

(57) **Zusammenfassung**

Ein Batteriegehäuse, insbesondere für ein elektrisch betriebenes Fahrzeug, umfasst einen einen Gehäuseinnenraum (26) in Umfangsrichtung umgrenzenden Gehäuserahmen (20), einen den Gehäuseinnenraum (26) in einem unteren Bereich des Gehäuserahmens (20) abschließenden Gehäuseboden, eine den Gehäuseinnenraum (26) in einem oberen Bereich des Gehäuserahmens (20) abschließende Gehäuseabdeckung, wobei der Gehäuserahmen (20) wenigstens ein als Hohlprofilteil ausgebildetes Rahmenelement (36, 36) umfasst, wobei in wenigstens einem als Hohlprofilteil ausgebildeten Rahmenelement (36, 38) wenigstens ein Strömungskanal (64) ausgebildet ist, wobei der wenigstens eine Strömungskanal (64) über wenigstens eine Außenöffnung in Strömungsverbindung mit einer Umgebung um das Batteriegehäuse herum steht oder bringbar ist und über wenigstens eine Innenöffnung in Strömungsverbindung mit dem Gehäuseinnenraum (26) steht oder bringbar ist, wobei in Zuordnung zu dem wenigstens einen Strömungskanal (64) eine druckabhängig oder/und temperaturabhängig eine Strömungsverbindung vom dem Gehäuseinnenraum (26) zu der Umgebung bereitstellende Abschlussanordnung vorgesehen ist

## Beschreibung

Die vorliegende Erfindung betrifft ein Batteriegehäuse, welches beispielsweise dazu vorgesehen sein kann, in einem elektrisch betriebenen Fahrzeug die als Energiespeicher dienende Batterie bzw. Batteriezellen aufzunehmen.

Um die in elektrisch betriebenen Fahrzeugen, wie zum Beispiel vollelektrisch betriebene Fahrzeuge, Hybridfahrzeuge, insbesondere Plug-in-Hybridfahrzeuge, und elektrisch betriebene Fahrzeuge mit Range-Extender, als Energiespeicher dienenden Batterien bzw. Batteriezellen gegen Umgebungseinflüsse, wie beispielsweise Feuchtigkeit und sehr niedrige Umgebungstemperaturen, abzuschirmen, werden derartige Batterien bzw. Batteriezellen im Allgemeinen in einem Batteriegehäuse untergebracht, welches die Batterien bzw. Batteriezellen im Wesentlichen vollständig umkapselt. Derartige Batteriegehäuse werden zum Erhalt eines möglichst niedrigen Schwerpunkts eines Fahrzeugs im Allgemeinen im Bereich eines Fahrzeug-Unterbodens positioniert, so dass beispielsweise ein Gehäuseboden eines derartigen Batteriegehäuses auch einen Teil des Fahrzeug-Unterbodens bereitstellen kann.

Unter ungünstigen Betriebszuständen, beispielsweise bei übermäßig hohen Ladeströmen bzw. Entladeströmen, können im Bereich derartiger Batterien zu einer thermischen Zerstörung derselben führende übermäßig hohe Temperaturen auftreten. Bei einer derartigen thermischen Zerstörung einer in einem Batteriegehäuse eingekapselten Batterie werden zum Teil giftige Gase bzw. Partikel freigesetzt, wobei der Druck und aufgrund der thermisch induzierten Zerstörung gegebenenfalls auch die Temperatur in dem Innenraum eines derartigen Batteriegehäuses zu einer Beschädigung des Batteriegehäuses und einer dabei auftretenden unkontrollierten Freisetzung der bei der thermischen Zerstörung entstehenden Gase bzw. Partikel führen können. Die bei der thermischen Zerstörung einer Batterie freigesetzten und in den dabei auch freigesetzten Gasen enthaltenen Partikel sind zum Großteil elektrisch leitend und können bei unkontrollierter Freisetzung einen Kurzschluss innerhalb der Batterie erzeugen. Ein derartiger Kurzschluss kann zur Entstehung eines Lichtbogens führen, wobei die Temperatur im Bereich eines derartigen Lichtbogens im Allgemeinen deutlich höher ist als die Temperatur der bei der thermischen Zerstörung einer Batterie freigesetzten Gase.

Es ist die Aufgabe der vorliegenden Erfindung, ein Batteriegehäuse bereitzustellen, welches eine kontrollierte Ableitung von im Falle einer thermischen Zerstörung einer darin enthaltenen Batterie entstehenden Gasen und Partikel gewährleistet.

Erfindungsgemäß wird diese Aufgabe gelöst durch ein Batteriegehäuse, insbesondere für ein elektrisch betriebenes Fahrzeug, umfassend:
- einen einen Gehäuseinnenraum in Umfangsrichtung umgrenzenden Gehäuserahmen,
- einen den Gehäuseinnenraum in einem unteren Bereich des Gehäuserahmens abschließenden Gehäuseboden,
- eine den Gehäuseinnenraum in einem oberen Bereich des Gehäuserahmens abschließende Gehäuseabdeckung,
wobei der Gehäuserahmen wenigstens ein als Hohlprofilteil ausgebildetes Rahmenelement umfasst, wobei in wenigstens einem als Hohlprofilteil ausgebildeten Rahmenelement wenigstens ein Strömungskanal ausgebildet ist, wobei der wenigstens eine Strömungskanal über wenigstens eine Außenöffnung in Strömungsverbindung mit einer Umgebung um das Batteriegehäuse herum steht oder bringbar ist und über wenigstens eine Innenöffnung in Strömungsverbindung mit dem Gehäuseinnenraum steht oder bringbar ist, wobei in Zuordnung zu dem wenigstens einen Strömungskanal eine druckabhängig oder/und temperaturabhängig eine Strömungsverbindung vom dem Gehäuseinnenraum zu der Umgebung bereitstellende Abschlussanordnung vorgesehen ist

Durch die Ausgestaltung des erfindungsgemäß aufgebauten Batteriegehäuses mit einem zumindest teilweise mit Hohlprofilteilen ausgebildeten Gehäuserahmen ist zunächst dafür gesorgt, dass durch den Gehäuserahmen eine vergleichsweise steife und stabile Struktur des Batteriegehäuses erhalten wird, so dass die in einem derartigen Batteriegehäuse enthaltenen Batteriezellen nicht nur gegen äußere Einflüsse abgekapselt sind, sondern auch bei massiven Krafteinwirkungen, wie diese beispielsweise bei Unfällen auftreten können, geschützt sind. Gleichzeitig können als Hohlprofilteile ausgebildete Rahmenelemente dazu genutzt werden, im Falle einer thermischen Zerstörung einer Batterie bzw. der Batteriezellen derselben die dabei entstehenden Gase und Partikel über einen bzw. mehrere darin gebildete Strömungskanäle kontrolliert aus dem Gehäuseinnenraum abzuleiten und an einer definierten Position zur Umgebung abzugeben. Damit kann gewährleistet werden, dass im Falle einer derartigen thermischen Zerstörung die dabei entstehenden und zur Umgebung abzugebenden Gase nicht in den Bereich des Fahrzeuginnenraums gelangen können.

Für eine eine hohe Steifigkeit des Batteriegehäuses gewährleistende Ausgestaltung kann der Gehäuserahmen zwei Paare von zueinander jeweils im Wesentlichen parallel verlaufenden und eine im Wesentlichen rechteckige Umfangsstruktur des Gehäuserahmens bildenden Rahmenelementen umfassen, wobei in wenigstens einem der als Hohlprofilteile ausgebildeten Rahmenelemente wenigstens ein Strömungskanal ausgebildet sein kann.

Für eine definierte Unterbrechung bzw. Freigabe der Strömungsverbindung zwischen dem Gehäuseinnenraum und der Umgebung kann die Abschlussanordnung umfassend:
- in Zuordnung zu wenigstens einer Innenöffnung, vorzugsweise jeder Innenöffnung, eine druckabhängig oder/und temperaturabhängig eine Strömungsverbindung zwischen dem Gehäuseinnenraum und dem wenigstens einen Strömungskanal bereitstellende Innen-Abschlussanordnung,
   oder/und
- in Zuordnung zu wenigstens einer Außenöffnung, vorzugsweise jeder Außenöffnung, eine druckabhängig oder/und temperaturabhängig eine Strömungsverbindung zwischen dem wenigstens einen Strömungskanal und der Umgebung bereitstellende Außen-Abschlussanordnung.

Um zu gewährleisten, dass der Gehäuseinnenraum grundsätzlich nach außen hin abgeschlossen ist und nur dann, wenn im Falle einer thermischen Zerstörung aufgrund der dabei entstehenden Gase der Druck im Gehäuseinnenraum übermäßig ansteigt, eine Verbindung nach außen entsteht, wird vorgeschlagen, dass wenigstens eine Innen-Abschlussanordnung, vorzugsweise jede Innen-Abschlussanordnung, die Strömungsverbindung zwischen dem Gehäuseinnenraum und dem wenigstens einen Strömungskanal bei Überschreiten eines Grenzdrucks im Gehäuseinnenraum freigibt, oder/und dass wenigstens eine Außen-Abschlussanordnung, vorzugsweise jede Außen-Abschlussanordnung, die Strömungsverbindung zwischen dem wenigstens einen Strömungskanal und der Umgebung bei Überschreiten eines Grenzdrucks im Strömungskanal freigibt.

Das definierte Herstellen einer Verbindung zwischen dem Gehäuseinnenraum und der Umgebung um das Batteriegehäuse herum kann beispielsweise dadurch erreicht werden, dass wenigstens eine Innen-Abschlussanordnung, vorzugsweise jede Innen-Abschlussanordnung, ein die Strömungsverbindung zwischen dem Gehäuseinnenraum und dem wenigstens einen Strömungskanal bei Überschreiten des Grenzdrucks im Gehäuseinnenraum freigebendes Ventil umfasst, oder/und dass wenigstens eine Außen-Abschlussanordnung, vorzugsweise jede Außen-Abschlussanordnung, ein die Strömungsverbindung zwischen dem wenigstens einen Strömungskanal und der Umgebung bei Überschreiten des Grenzdrucks in dem wenigstens einen Strömungskanal freigebendes Ventil umfasst. Der Einsatz eines derartigen Ventils bringt den Vorteil mit sich, dass dann, wenn nach vorübergehendem Herstellen einer Strömungsverbindung zwischen dem Gehäuseinnenraum und der Umgebung der Druck im Gehäuseinnenraum wieder sinkt, durch ein derartiges Ventil die Strömungsverbindung wieder unterbrochen werden kann und eine dann gegebenenfalls nicht mehr erforderliche Abgabe von Gasen zur Umgebung unterbunden werden kann.

Bei einer insbesondere hinsichtlich der einfachen baulichen Ausgestaltung vorteilhaften Struktur des erfindungsgemäßen Batteriegehäuses kann wenigstens eine Innen-Abschlussanordnung, vorzugsweise jede Innen-Abschlussanordnung, ein die Strömungsverbindung zwischen dem Gehäuseinnenraum und dem wenigstens einen Strömungskanal bei Überschreiten des Grenzdrucks im Gehäuseinnenraum freigebendes Berstelement umfassen, oder/und kann wenigstens eine Außen-Abschlussanordnung, vorzugsweise jede Außen-Abschlussanordnung, ein die Strömungsverbindung zwischen dem wenigstens einen Strömungskanal und der Umgebung bei Überschreiten des Grenzdrucks in dem wenigstens einen Strömungskanal freigebendes Berstelement umfassen. Ein derartiges Berstelement kann beispielsweise als Berstscheibe ausgebildet sein, welche bei Erreichen des Grenzdrucks zerstört wird und dadurch die Strömungsverbindung freigibt.

Alternativ oder zusätzlich zum druckabhängigen Freigeben der Strömungsverbindung zwischen dem Gehäuseinnenraum und der Umgebung um das Batteriegehäuse herum kann vorgesehen sein, dass wenigstens eine Innen-Abschlussanordnung, vorzugsweise jede Innen-Abschlussanordnung, die Strömungsverbindung zwischen dem Gehäuseinnenraum und dem wenigstens einen Strömungskanal bei Überschreiten einer Grenztemperatur im Gehäuseinnenraum freigibt, oder/und dass wenigstens eine Außen-Abschlussanordnung, vorzugsweise jede Außen-Abschlussanordnung, die Strömungsverbindung zwischen dem wenigstens einen Strömungskanal und der Umgebung bei Überschreiten einer Grenztemperatur in dem wenigstens einen Strömungskanal freigibt. Durch das Freigeben der Strömungsverbindung zwischen dem Gehäuseinnenraum und der Umgebung um das Batteriegehäuse herum bei Erreichen bzw. Überschreiten einer Grenztemperatur kann bei einer thermischen Zerstörung einer in dem Batteriegehäuse enthaltenen Batterie bereits vor Erreichen eines übermäßig hohen Drucks das Entweichen von dabei entstehenden Gasen ermöglicht werden.

Beispielsweise kann für eine einfach realisierbare bauliche Ausgestaltung wenigstens eine Innen-Abschlussanordnung, vorzugsweise jede Innen-Abschlussanordnung, ein die Strömungsverbindung zwischen dem Gehäuseinnenraum und dem wenigstens einen Strömungskanal bei Überschreiten der Grenztemperatur im Gehäuseinnenraum freigebendes Schmelzelement umfassen, oder/und kann wenigstens eine Außen-Abschlussanordnung, vorzugsweise jede Außen-Abschlussanordnung, ein die Strömungsverbindung zwischen dem Strömungskanal und der Umgebung bei Überschreiten der Grenztemperatur in dem wenigstens einen Strömungskanal freigebendes Schmelzelement umfassen. Derartige Schmelzelemente können nach Art von Schmelzsicherungen mit in einem definierten Temperaturbereich schmelzenden und dadurch die Strömungsverbindung freigebenden Materialien ausgebildet sein.

Zur definierten Strömungsführung kann wenigstens ein Strömungskanal wenigstens einen Kanalabschnitt umfassen. Wenn dabei der wenigstens eine Strömungskanal einen einzigen Kanalabschnitt umfasst, wird eine baulich besonders einfach realisierbare Ausgestaltung erhalten.

Um vermittels des wenigstens einen Strömungskanals nicht nur das Entweichen von bei einer thermischen Zerstörung einer Batterie entstehenden Gasen zu ermöglichen, sondern den Strömungskanal gleichzeitig auch als Mittel zum Auffangen von bei der thermischen Zerstörung möglicherweise auch freigesetztem Partikelmaterial nutzen zu können, wird vorgeschlagen, dass wenigstens ein Strömungskanal wenigstens zwei aneinander anschließende, in zueinander unterschiedlichen Strömungsrichtungen durchströmbare Kanalabschnitte umfasst. Durch die zueinander unterschiedlichen Strömungswege in den Kanalabschnitten wird ein in seiner Gesamtheit näherungsweise labyrinthartiger Strömungsweg gebildet, bei welchem insbesondere in die verschiedenen Kanalabschnitte miteinander verbindenden Verbindungsabschnitten Bereiche existieren, in welchen derartige in dem entweichenden Gas mitgeführte Partikelmaterialien sich ablagern können.

Um durch eine Strömungsumlenkung eine effiziente Ablagerung von Partikelmaterialien zu erreichen, kann vorgesehen sein, dass die wenigstens zwei Kanalabschnitte in zueinander im Wesentlichen entgegengesetzten Strömungsrichtungen durchströmbar sind.

Einer der Kanalabschnitte kann über die wenigstens eine Innenöffnung in Strömungsverbindung mit dem Gehäuseinnenraum stehen oder bringbar sein, und ein anderer der Kanalabschnitte kann über die wenigstens eine Außenöffnung in Strömungsverbindung mit der Umgebung stehen oder bringbar sein. Dadurch wird gewährleistet, dass zwangsweise eine eine Ablagerung von Partikelmaterial unterstützende Umlenkung des den Strömungskanal bzw. dessen Kanalabschnitte durchströmenden Abgases auftritt.

Für eine hohe thermische und mechanische Festigkeit des Gehäuserahmens wird vorgeschlagen, dass wenigstens ein als Hohlprofilteil ausgebildetes und wenigstens einen Strömungskanal bereitstellendes Rahmenelement, vorzugsweise jedes als Hohlprofilteil ausgebildetes und wenigstens einen Strömungskanal bereitstellendes Rahmenelement, als Blechumformteil ausgebildet ist.

Für eine definierte Strömungsführung durch ein oder mehrere Rahmenelemente hindurch wird vorgeschlagen, dass wenigstens eine Innenöffnung, vorzugsweise jede Innenöffnung, in einem als Hohlprofilteil ausgebildeten Rahmenelement ausgebildet ist, oder/ und dass wenigstens eine Außenöffnung, vorzugsweise jede Außenöffnung, in einem als Hohlprofilteil ausgebildeten Rahmenelement ausgebildet ist.

Für eine definierte Positionierung einer Batterie in dem Batteriegehäuse kann in dem Gehäuseinnenraum eine mit dem Gehäuserahmen verbundene Trägerstruktur zur Aufnahme einer Mehrzahl von Batteriezellen angeordnet sein.

Um auch die Trägerstruktur für die Ableitung von bei einer thermischen Zerstörung einer Batterie entstehenden Gasen oder/und Partikeln nutzen zu können, wird vorgeschlagen, dass die Trägerstruktur wenigstens ein als Hohlprofilteil ausgebildetes Trägerelement umfasst, und dass in wenigstens einem als Hohlprofilteil ausgebildeten Trägerelement wenigstens ein Strömungskanal ausgebildet ist, wobei der wenigstens eine in dem wenigstens einen als Hohlprofilteil ausgebildeten Trägerelement ausgebildete Strömungskanal über wenigstens eine Innenöffnung in Strömungsverbindung mit dem Gehäuseinnenraum steht oder bringbar ist.

Dabei kann zum Einleiten von derartigen Gasen bzw. Partikeln in den in einem Trägerelement ausgebildeten Strömungskanal wenigstens eine Innenöffnung, vorzugsweise jede Innenöffnung, in einem als Hohlprofilteil ausgebildeten Trägerelement ausgebildet sein.

Zum Ableiten von in einen Strömungskanal in einem als Hohlprofilteil ausgebildeten Trägerelement eingeleiteten Gasen bzw. Partikeln zur Umgebung kann der in dem wenigstens einen als Hohlprofilteil ausgebildeten Trägerelement ausgebildete Strömungskanal in Strömungsverbindung mit wenigstens einem in wenigstens einem als Hohlprofilteil ausgebildeten Rahmenelement ausgebildeten Strömungskanal stehen, und wenigstens ein in einem als Hohlprofilteil ausgebildeten Rahmenelement ausgebildeter Strömungskanal kann über wenigstens eine Außenöffnung in Strömungsverbindung mit der Umgebung um das Batteriegehäuse herum stehen oder bringbar sein.

Die Erfindung betrifft ferner eine Batteriebaugruppe, insbesondere für ein elektrisch betriebenes Fahrzeug, umfassend ein eine Mehrzahl von Batteriezellen enthaltendes, erfindungsgemäßes Batteriegehäuse.

Weiter betrifft die Erfindung ein elektrisch betriebenes Fahrzeug, welches eine erfindungsgemäße Batteriebaugruppe aufweist.

Die vorliegende Erfindung wird nachfolgend mit Bezug auf die beiliegenden Figuren detailliert beschrieben. Es zeigt:
- Fig. 1: eine Prinzip-Darstellung eines elektrisch betriebenen Fahrzeugs;
- Fig. 2: eine Seitenansicht eines Batteriegehäuses des Fahrzeugs der Fig. 1;
- Fig. 3: eine perspektivische Ansicht eines Gehäuserahmens des Batteriegehäuses der Fig. 2;
- Fig. 4: eine Draufsicht auf den Gehäuserahmen der Fig. 3;
- Fig. 5: eine perspektivische Ansicht als eines als Hohlprofilteil ausgebildeten Rahmenelements des Gehäuserahmens der Fig. 3;
- Fig. 6: eine Stirnansicht des Rahmenelements der Fig. 5;
- Fig. 7: eine Prinzip-Längsschnittdarstellung eines als Hohlprofilteil ausgebildeten Rahmenelements mit einem zwei Kanalabschnitte aufweisenden Strömungskanal;
- Fig. 8: eine der Fig. 7 entsprechende, prinzipartige Darstellung einer alternativen Ausgestaltung eines Rahmenelements;
- Fig. 9: eine weitere der Fig. 7 entsprechende, prinzipartige Darstellung eines zur Ableitung von Gasen bzw. Partikeln mit Rahmenelementen zusammenwirkenden Trägerelements einer Trägerstruktur.

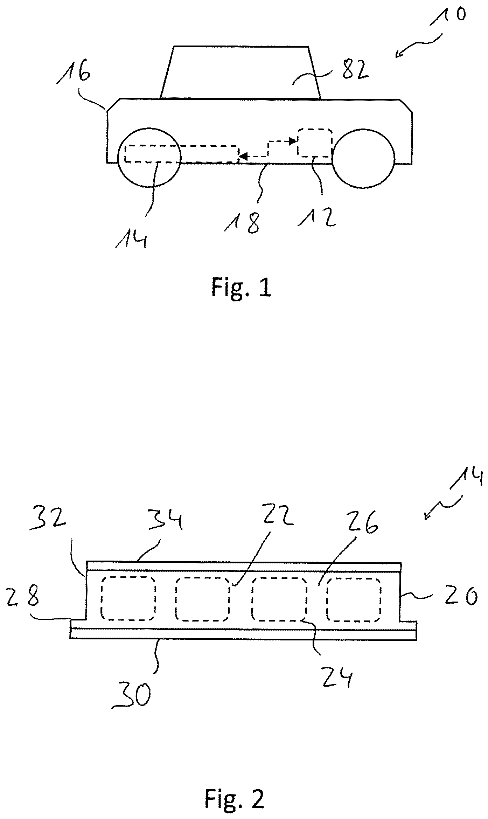

In Fig. 1 ist ein elektrisch betriebenes Fahrzeug mit 10 bezeichnet. Das Fahrzeug 10 umfasst einen oder mehrere Elektro-Traktionsmotoren 12, die aus einer in einem Batteriegehäuse 14 angeordneten Batterie gespeist werden bzw. im Rekuperationsbetrieb Energie in die im Batteriegehäuse 14 angeordnete Batterie zurückspeisen. Das Batteriegehäuse 14 ist beispielsweise im Heckbereich 16 des Fahrzeugs 10 im Bereich eines Unterbodens 18 angeordnet und kann selbst einen Teil des Unterbodens bilden.

Das in Fig. 2 in prinzipartiger Stirnansicht dargestellte Batteriegehäuse 14 umfasst einen nachfolgend detailliert beschriebenen Gehäuserahmen 20, welcher einen die Batterie 22 bzw. mehrere Batteriezellen 24 der Batterie 22 enthaltenden Gehäuseinnenraum 26 in Umfangsrichtung umschließt. In einem in einer Höhenrichtung bzw. Vertikalrichtung unteren Bereich 28 des Gehäuserahmens 20 ist ein den Gehäuseinnenraum 26 nach unten abschließender Gehäuseboden 30 am Gehäuserahmen 20 festgelegt. In einem oberen Bereich 32 des Gehäuserahmens 20 ist an diesem eine plattenartig oder deckelartig ausgebildete Gehäuseabdeckung 34 am Gehäuserahmen 20 festgelegt und schließt den Gehäuseinnenraum 26 nach oben ab.

Durch das Batteriegehäuse 14 ist die Batterie 22 bzw. sind deren Batteriezellen 24 nach außen hin im Wesentlichen vollständig umkapselt, so dass die Batteriezellen 24 der Batterie 22 gegen äußere Einflüsse, wie z. B. Feuchtigkeit, Verunreinigungen oder dergleichen, geschützt sind.

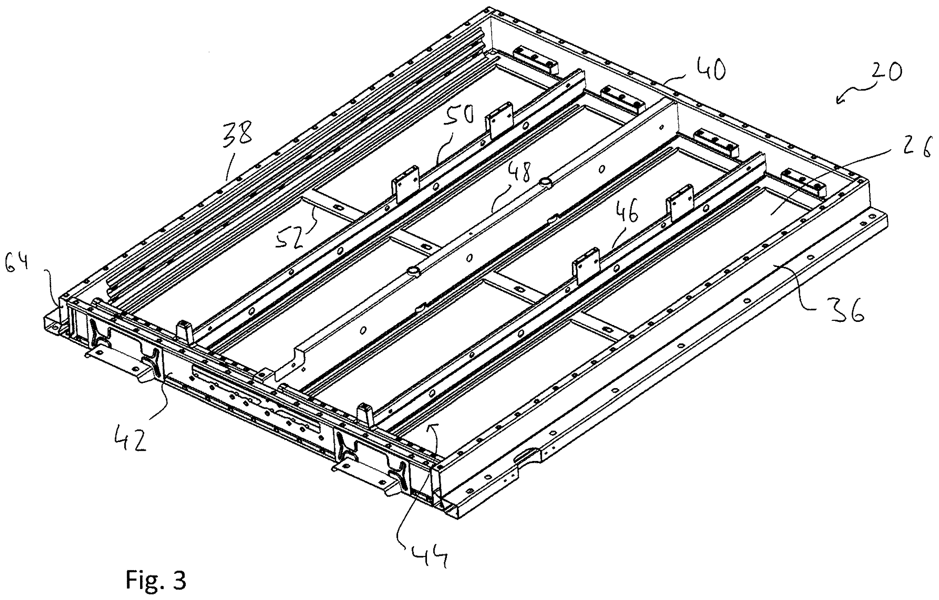

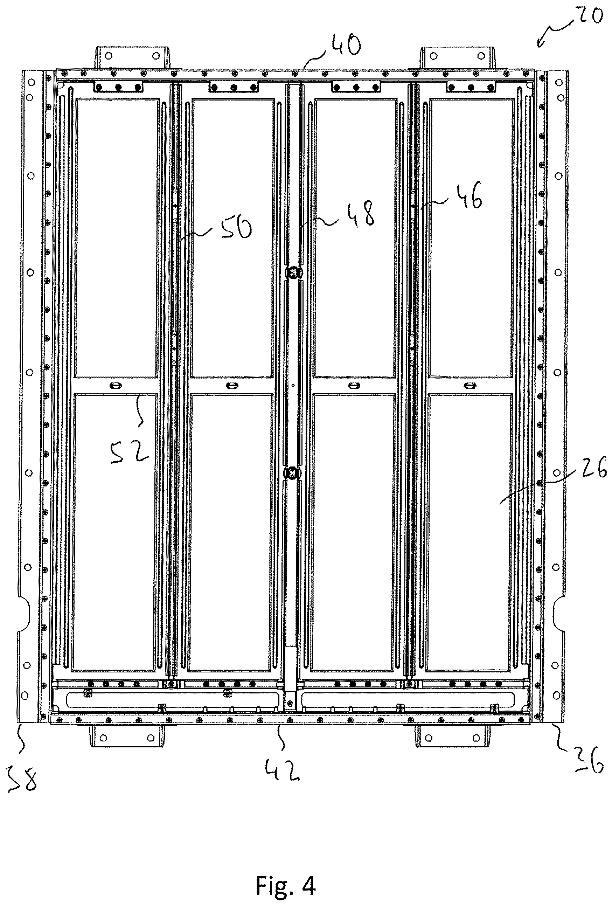

Die Fig. 3 und 4 zeigen den Gehäuserahmen 20 des Batteriegehäuses 14. Der Gehäuserahmen 20 ist mit vier den Gehäuseinnenraum 26 nach außen hin bzw. in Umfangsrichtung umgrenzenden Rahmenelementen 36, 38, 40, 42 aufgebaut. Dabei liegen die Rahmenelemente 36 und 38 bzw. die Rahmenelemente 40, 42 einander im Wesentlichen parallel gegenüber, so dass durch diese beiden Paare von zueinander parallel verlaufenden Rahmenelementen 36, 38 bzw. 40, 42 eine im Wesentlichen rechteckige Umfangsstruktur des Batteriegehäuses 14 bzw. des Gehäuserahmens 20 bereitgestellt ist.

Mit dem Gehäuserahmen 20 bzw. den Rahmenelementen 36, 38, 40, 42 ist eine im Wesentlichen im Gehäuseinnenraum 26 angeordnete Trägerstruktur 44 verbunden. Diese stellt im Gehäuseinnenraum 26 mehrere Aufnahmebereiche bereit, in welchen die Batteriezellen 24 der Batterie 22 angeordnet und im Batteriegehäuse 14 fest verankert werden können. Die Trägerstruktur 44, welche mehrere zu den Rahmenelementen 36, 38 bzw. auch den Rahmenelementen 40, 42 parallel bzw. dazu orthogonal verlaufende Trägerelemente 46, 48, 50, 52 aufweisen kann, trägt auch zur Versteifung und somit zur Stabilisierung des Batteriegehäuses 14 bei.

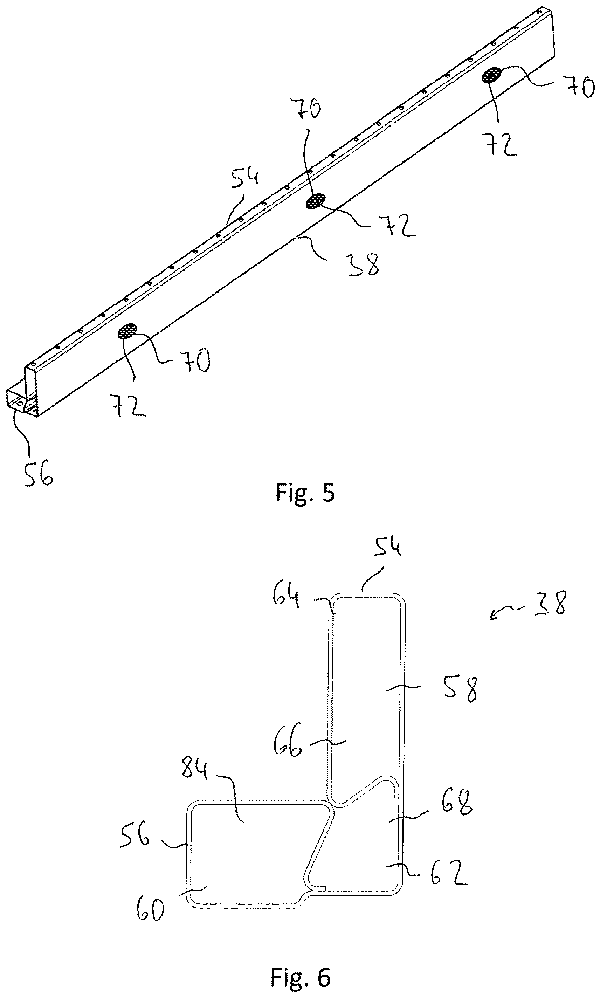

Die Fig. 5 und 6 zeigen den Aufbau des als Hohlprofilteil ausgebildeten Rahmenelements 38. Es ist zu betonen, dass das zu diesem parallel verlaufende Rahmenelement 36 in gleicher Weise ausgebildet sein kann.

Das Rahmenelement 38 weist eine im Querschnitt im Wesentlichen L-förmige Struktur auf, welche durch Biegen eines Metallblechs bereitgestellt ist. Das Metallblech ist derart gebogen, dass in den beiden L-Schenkeln 54, 56 und im Angrenzungsbereich der beiden L-Schenkel 54, 56 aneinander jeweilige in Längsrichtung des Rahmenelements 38 im Wesentlichen unterbrechungsfrei durchlaufende Hohlräume 58, 60, 62 gebildet sind. Zumindest ein Teil dieser Hohlräume 58, 60, 62 kann zum Bereitstelen eines allgemein mit 64 bezeichneten Strömungskanals genutzt werden, über welchen der Gehäuseinnenraum 26 in Verbindung mit der Umgebung um das Batteriegehäuse 14 herum gebracht werden kann.

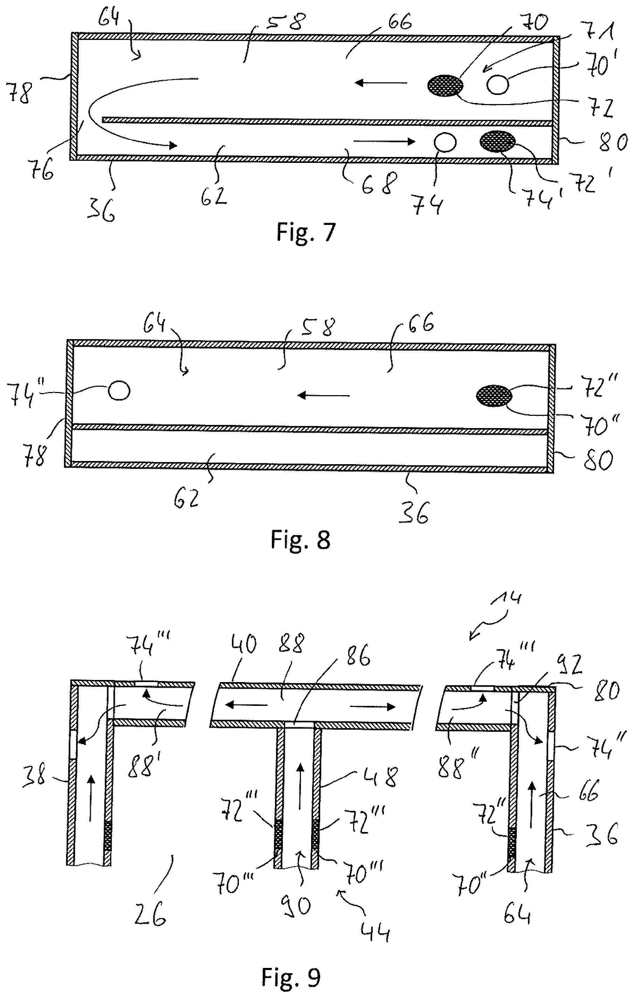

In dem beispielsweise in Fig. 7 veranschaulichten Beispiel bilden der Hohlraum 58 und der Hohlraum 62 jeweils einen Kanalabschnitt 66, 68 des Strömungskanals 64. Über eine oder mehrere Innenöffnungen 70 ist der Kanalabschnitt 66 bzw. der Strömungskanal 64 grundsätzlich zum Gehäuseinnenraum 26 offen. Um für einen normalen Betriebszustand des Batteriegehäuses 14 diese Verbindung zwischen dem Strömungskanal 64 und dem Gehäuseinnenraum 26 zu unterbrechen, ist der bzw. jeder Innenöffnung 70 eine Abschlussanordnung 71 zugeordnet, welche als Innen-Abschlussanordnung 72 ausgebildet ist und die Innenöffnung 70 grundsätzlich abschließt und somit die Strömungsverbindung zwischen dem Gehäuseinnenraum 26 und im Strömungskanal 64 unterbricht. Der Strömungskanal 68 ist über eine oder mehrere Außenöffnungen 74 zur Umgebung offen.

Die Innen-Abschlussanordnung 72 kann beispielsweise ein als Berstscheibe ausgebildetes Berstelement umfassen, welches dann, wenn der Druck im Gehäuseinnenraum übermäßig ansteigt und einen Grenzdruck erreicht bzw. überschreitet, zerbricht und dadurch die Strömungsverbindung zwischen dem Gehäuseinnenraum 26 und dem Kanalabschnitt 66 des Strömungskanals 64 freigibt. Ein derartiger Zustand kann beispielsweise dann auftreten, wenn aufgrund zu starker Belastung die Batterie 22 bzw. die Batteriezellen 24 derselben übermäßig stark erhitzt werden und dabei aus den Batteriezellen 24 im Gehäuseinnenraum Gase freigesetzt werden. Bei einer derartigen thermisch induzierten Zerstörung der Batterie 22 kann der Druck der im Gehäuseinnenraum 24 entstehenden bzw. freigesetzten Gase derart ansteigen, dass es erforderlich ist, diese Gase definiert aus dem Gehäuseinnenraum abzuleiten. Gibt aufgrund eines übermäßigen Druckanstiegs die Innen-Abschlussanordnung 72 den Strömungsweg von dem Gehäuseinnenraum 26 in den Strömungskanal 64 frei, strömen die bei einer thermischen Zerstörung der Batterie 22 freigesetzten Gase durch die Innenöffnung 70 in den Kanalabschnitt 66 und entlang des Kanalabschnitts 66 in einen Verbindungsabschnitt 76, in welchem der Kanalabschnitt 66 zum Kanalabschnitt 68 offen ist. Durch eines von zwei die Hohlräume 58, 60, 62 an den Längsenden des Rahmenelements 38 abschließenden Abschlusselementen 78, 80 wird der Gasstrom in den Kanalabschnitt 68 umgelenkt und strömt entlang des Kanalabschnitts 68 zur Außenöffnung 74. Die beiden Kanalabschnitte 66, 68 werden dabei seriell durchströmt. Im Bereich der Außenöffnung 74 treten die Gase an definierter Positionierung aus dem Batteriegehäuse 14 aus, so dass insbesondere auch vermieden werden kann, dass derartige zum Teil giftige Gase in den Bereich eines Fahrzeuginnenraums 82 gelangen können.

Beim Strömen entlang des Strömungskanals 64 können sich die aus dem Gehäuseinnenraum 26 entweichenden Gase auch abkühlen, und bei der thermischen Zerstörung der Batterie 22 möglicherweise freigesetztes Partikelmaterial kann sich im Bereich der Kanalabschnitte 66, 68, insbesondere im Bereich des Verbindungsabschnitts 76, an der Innenoberfläche des Rahmenelements 38 ablagern, so dass auch der Austritt von derartigem Partikelmaterial zur Umgebung weitestgehend verhindert werden kann.

Es ist darauf hinzuweisen, dass unter Beibehalt des vorangehend mit Bezug auf die Fig. 7 beschriebenen Funktionsprinzips verschiedene Variationen möglich sind. So kann die Innen-Abschlussanordnung 72 in Zuordnung zu der bzw. jeder Innenöffnung 70 ein Ventil mit einem beispielsweise durch Federvorspannung in seine Schließstellung beaufschlagten Ventilelement umfassen. Bei Erreichen des Grenzdrucks kann dieses Ventilelement von einem zugeordneten Ventilsitz abheben und somit die Strömungsverbindung vom Gehäuseinnenraum 26 zum Strömungskanal 64 freigeben. Fällt der Gasdruck im Gehäuseinnenraum 26 dann wieder unter den Grenzdruck ab, schließt dieses Ventil, so dass die weitere Abgabe von Gas zur Umgebung verhindert werden kann.

Bei einer weiteren alternativen Ausgestaltungsanordnung kann die in Zuordnung zu der bzw. jeder Innenöffnung 70 vorgesehene Innen-Abschlussanordnung 72 dazu ausgebildet sein, bei Erreichen einer Grenztemperatur im Gehäuseinnenraum 26 bzw. am Batteriegehäuse 14 den Strömungsweg aus dem Gehäuseinnenraum 26 freizugeben. Hierzu kann beispielsweise die Innen-Abschlussanordnung 72 ein bei Erreichen bzw. Überschreiten einer Grenztemperatur schmelzendes Schmelzelement umfassen, dessen Übergang von einem festen zu einem fließfähigen Zustand im Bereich der Grenztemperatur auftritt. Beispielsweise kann ein derartiges Schmelzelement aus Kunststoff oder Metall aufgebaut sein.

Die Fig. 5 veranschaulicht, dass entlang des Rahmenelements 38 auch mehrere Innenöffnungen 70 mit einer jeweils zugeordneten Innen-Abschlussanordnung 72 vorgesehen sein können. Gleichermaßen können alternativ oder zusätzlich auch mehrere Außenöffnungen 74 entlang des Rahmenelements 38 verteilt vorgesehen sein.

Zum Bereitstellen des Strömungskanals 64 könnte beispielsweise auch oder alternativ zum Hohlraum 58 der Hohlraum 60 als Kanalabschnitt 84 genutzt werden. Es könnten dann mit den Hohlräumen 58, 62, 60 drei seriell aufeinander folgende und durchströmbare Kanalabschnitte 66, 68, 84 bereitgestellt sein. Die Außenöffnung 74. bzw. alle Außenöffnungen 74 könnten dann im Bereich des durch den Hohlraum 60 bereitgestellten Kanalabschnitts 84 vorgesehen sein. Grundsätzlich könnte jedoch auch nur der Hohlraum 58 oder nur der Hohlraum 62 zum Bereitstellen des Strömungskanals 64 genutzt werden. Beispielsweise bei derartiger Ausgestaltung können die Innenöffnung/en 70 und die Außenöffnung/en 74 in einander im Wesentlichen direkt gegenüber liegenden, den Strömungskanal 64 begrenzenden Wandungsabschnitten des Rahmenelements 38 ausgebildet sein, so dass der Strömungskanal 64 sich im Wesentlichen quer zur Längsrichtung des Rahmenelements 38 durch dieses hindurcherstreckt. Auch ist es beispielsweise bei dieser Ausgestaltung möglich, dass die Außenöffnung/en 74 an dem bzw. den stirnseitig offenen Längsendbereich/en des Rahmenelements 38 vorgesehen ist bzw. sind.

Auch ist es selbstverständlich, dass in entsprechender Weise auch das Rahmenelement 36 ausgebildet sein kann. Auch die Rahmenelemente 40, 42 können, sofern diese als Hohlprofilteile ausgebildet sind, alternativ oder zusätzlich zu den Rahmenelementen 36, 38 zum Bereitstellen eines oder mehrerer derartiger Strömungskanäle genutzt werden, über welche im Falle einer thermischen Zerstörung der Batterie 22 Gase zur Umgebung abgegeben werden können.

Eine weitere alternative Ausgestaltung ist in Fig. 7 veranschaulicht. Bei dieser Ausgestaltung umfasst die Abschlussanordnung 71 in Zuordnung zu der bzw. jeder Außenöffnung 74' eine Außen-Abschlussanordnung 72', während über die Innenöffnung 70' der Strömungskanal 64 permanent zum Gehäuseinnenraum 26 offen ist. Die Außen-Abschlussanordnung 72' kann dabei in einer der vorangehend beschriebenen Varianten ausgebildet sein.

Die Abschlussanordnung 71 könnte grundsätzlich auch, beispielsweise bereitgestellt als Berstelement, Schmelzelement oder Ventil, im Inneren des Strömungskanals 71, also in Strömungsrichtung zwischen der bzw. den Innenöffnungen 70 und der bzw. den Außenöffnungen 74 angeordnet sein.

Die Fig. 8 zeigt eine derartige Ausgestaltung des als Hohlprofilteil ausgebildeten Rahmenelements 36, bei welcher der darin ausgebildete Strömungskanal 64 nur einen einzigen Kanalabschnitt 66 umfasst. In einem Längsendbereich des Rahmenelements 36 ist die Innenöffnung 70" mit der dieser zugeordneten Innen-Abschlussanordnung 72" an der dem Gehäuseinnenraum 26 zugewandten Seite des Rahmenelements 36 vorgesehen. In dem anderen Längsendbereich des Rahmenelements 40 ist an der zur Umgebung orientierten Seite des Rahmenelements 36 die Außenöffnung 74" vorgesehen. Der in dem Rahmenelement 36 auch gebildete Hohlraum 62 wird in diesem Falle nicht als Kanalabschnitt des Strömungskanals 64 genutzt.

Bei einer thermischen Zerstörung einer im Gehäuseinnenraum 26 positionierten Batterie strömen die dabei freigesetzten, Partikel transportierenden Gase nach Zerstörung der Innen-Abschlussanordnung 72" bzw. Freigabe der Innenöffnung 70" entlang des einzigen im Rahmenelement 36 zum Bereitstellen des Strömungskanals 64 genutzten Kanalabschnitts 66 zum anderen Längsendbereich des Rahmenelements 36 und treten dort im Bereich der Außenöffnung 74" zur Umgebung aus.

Eine weitere alternative Ausgestaltung eines erfindungsgemäß aufgebauten Batteriegehäuses 14 ist in Fig. 9 veranschaulicht. Bei dieser Ausgestaltung wird auch die Trägeranordnung 44 dazu genutzt, im Fall einer thermischen Zerstörung einer im Gehäuseinnenraum 26 angeordneten Batterie freigesetzte Gase bzw. Partikel zur Umgebung abzuleiten.

Beispielhaft veranschaulicht anhand des als Hohlprofilteil ausgebildeten Trägerelements 48 ist erkennbar, dass in diesem ein Strömungskanal 90 ausgebildet ist, der im Bereich einer im Rahmenelement 40 ausgebildeten Öffnung 86 zu einem im Rahmenelement 40 ausgebildeten Strömungskanal 88 offen ist. Im Strömungskanal 88 sind, ausgehend vom Bereich der Öffnung 86", in entgegengesetzten Richtungen von der Öffnung 86 weg führende und dementsprechend auch in zueinander im Wesentlichen entgegengesetzten Richtungen durchströmbare Kanalabschnitte 88', 88" des Strömungskanals 88 ausgebildet. Diese führen zu an der Außenseite des Rahmenelements 40 vorgesehenen Außenöffnungen 74‴ in den jeweiligen Längsendbereichen des Rahmenelements 40.

In diesen Längsendbereichen kann beispielsweise das Rahmenelement 40 zu dem daran anschließenden Rahmenelement 36 im Bereich einer darin ausgebildeten Öffnung 92 offen sein. Ein entsprechender Anschluss kann auch im Bereich des Rahmenelements 38 vorgesehen sein. Wie beispielsweise im Zusammenhang mit dem in Fig. 9 rechts dargestellten Rahmenelement 36 erkennbar, besteht somit eine Strömungsverbindung zwischen dem Strömungskanal 88 bzw. im Falle des Rahmenelements 36 dem Kanalabschnitt 88" und dem im Rahmenelement 36 ausgebildeten Strömungskanal 64. Der Strömungskanal 64 kann über eine oder mehrere an der Außenseite des Rahmenelements 36 vorgesehene Außenöffnungen 74" zur Umgebung offen sein.

An dem Trägerelement 48 ist eine bzw. sind beispielsweise mehrere Innenöffnungen 70‴ mit diesen jeweils zugeordneten Innen-Abschlussanordnungen 72‴ vorgesehen. Insbesondere dann, wenn der Strömungskanal 88 im Rahmenelement 40 zu einem oder beiden Rahmenelementen 36, 38 offen ist und darin ein Strömungskanal 64 beispielsweise mit einem einzigen Kanalabschnitt 66 ausgebildet ist, ist es möglich, auch an dem bzw. den Rahmenelementen 36 bzw. 38 eine oder mehrere derartige Innenöffnungen 70" mit einer jeweils zugeordneten Innen-Abschlussanordnung 72" vorzusehen.

Bei einer thermischen Zerstörung einer im Gehäuseinnenraum 26 angeordneten Batterie können die am Trägerelement 48 vorgesehenen Innen-Abschlussanordnungen 72‴ und, sofern vorgesehen, auch die an dem bzw. den Rahmenelementen 36 bzw. 38 vorgesehenen Innen-Abschlussanordnungen 72" beispielsweise durch Zerstörung die Strömungsverbindung zum Gehäuseinnenraum 26 freigeben, so dass bei der thermischen Zerstörung freigesetzte Gase bzw. Partikel in den Strömungskanal 90 und über diesen in den Strömungskanal 88 im Rahmenelement 74 strömen können. Über die Kanalabschnitte 88', 88", welche über die Öffnung 86 in den Strömungskanal 88 eingetretene Gase bzw. Partikel in strömungstechnischer Hinsicht zueinander parallel aus dem Bereich der Öffnung 86 ableiten, gelangen die Gase bzw. Partikel in den Bereich der Außenöffnungen 74‴ und, sofern eine entsprechende Strömungsverbindung besteht, auch in dem Bereich der Außenöffnungen 74" in einem oder beiden Rahmenelementen 36, 38 und können somit an definierter Position zur Umgebung abgegeben werden. Auch über die Innenöffnungen 70" in zumindest eines der Rahmenelemente 36, 38 Gase bzw. Partikel können über die Außenöffnungen 74"zur Umgebung austreten.

Es ist darauf hinzuweisen, dass alternativ oder zusätzlich zur Ausgestaltung des Trägerelements 48 mit einem Strömungskanal 90 auch zumindest eines der Trägerelemente 46, 50 zum Bereitstellen eines derartigen Strömungskanals als Hohlprofilteil ausgebildet und entsprechend der Fig. 9 im Zusammenhang mit dem Trägerelement 48 dargestellten Art und Weise an das Trägerelement 40 angebunden sein kann. Weiter ist darauf hinzuweisen, dass auch bei dieser Ausgestaltungsform alternativ zum Vorsehen der Innen-Abschlussanordnungen 72‴ bzw. 72" in Zuordnung zu den Außenöffnungen 74‴ bzw. 74" Außen-Abschlussanordnungen vorgesehen sein können, um grundsätzlich den Gehäuseinnenraum 36 abzuschließen.

Bei der in Fig. 9 dargestellten Ausgestaltungsform umfasst der in dem Trägerelement 48 ausgebildete Strömungskanal 90 entsprechend der in Fig. 8 dargestellten Ausgestaltung des Rahmenelements 36 einen einzigen Kanalabschnitt der von der bzw. den Innenöffnungen 70‴ zu dem stirnseitig offenen Ende des Trägerelement 48 führt und dort über die Öffnung 86 zum Strömungskanal 88 im Rahmen Element 40 offen ist. Entsprechend der in Fig. 7 dargestellten Ausgestaltung des Rahmenelements könnte grundsätzlich der Strömungskanal 90 im Trägerelement 48 auch mit mehreren zueinander im Wesentlichen parallel verlaufenden und von Gasen bzw. Partikeln seriell durchströmbaren Kanalabschnitten ausgebildet sein.

Anhand der Fig. 9 ist erkennbar, dass die oder ggf. mehrere Innenöffnung/en und die bzw. ggf. mehrere Außenöffnung/en an verschiedenen als Hohlprofilteile ausgebildeten Elementen des Batteriegehäuses vorgesehen sein können. Dies kann, wie in Fig. 9 dargestellt, beispielsweise dadurch realisiert sein, dass eine oder mehrere Innenöffnungen an einem oder mehreren Trägerelementen der Trägerstruktur und eine oder mehrere Außenöffnungen an einem oder mehreren der Rahmenelemente vorgesehen sind, oder/ und dadurch, dass eine oder mehrere Innenöffnungen an einem oder mehreren Rahmenelementen, beispielsweise den Rahmenelementen 36 oder/ und 38, vorgesehen sind und eine oder mehrere Außenöffnungen an einem oder mehreren anderen Rahmenelementen, beispielsweise dem Rahmenelement 40, vorgesehen sind.

Bei dem erfindungsgemäß aufgebauten Batteriegehäuse dienen die als Hohlprofilteile ausgebildeten Rahmenelemente nicht nur als die Steifigkeit des Batteriegehäuses erhöhende Strukturelemente, sondern dienen gleichzeitig auch dazu, Strömungskanäle zur definierten Ableitung von im Falle einer thermischen Zerstörung einer im Gehäuseinnenraum des Batteriegehäuses angeordneten Batterie freigesetzten Gasen und Partikel, um diese kontrolliert und an definierter Position zur Umgebung ableiten zu können.

## Patentansprüche

1. Batteriegehäuse, insbesondere für ein elektrisch betriebenes Fahrzeug, umfassend:
- einen einen Gehäuseinnenraum (26) in Umfangsrichtung umgrenzenden Gehäuserahmen (20),
- einen den Gehäuseinnenraum (26) in einem unteren Bereich (28) des Gehäuserahmens (20) abschließenden Gehäuseboden (30),
- eine den Gehäuseinnenraum (26) in einem oberen Bereich (32) des Gehäuserahmens (20) abschließende Gehäuseabdeckung (34),
wobei der Gehäuserahmen (20) wenigstens ein als Hohlprofilteil ausgebildetes Rahmenelement (36, 38, 40) umfasst, wobei in wenigstens einem als Hohlprofilteil ausgebildeten Rahmenelement (36, 38, 40) wenigstens ein Strömungskanal (64, 88) ausgebildet ist, wobei der wenigstens eine Strömungskanal (64, 88) über wenigstens eine Außenöffnung (74; 74'; 74"; 74‴) in Strömungsverbindung mit einer Umgebung um das Batteriegehäuse (14) herum steht oder bringbar ist und über wenigstens eine Innenöffnung (70; 70'; 70"; 70‴) in Strömungsverbindung mit dem Gehäuseinnenraum (26) steht oder bringbar ist, wobei in Zuordnung zu dem wenigstens einen Strömungskanal (64, 88) eine druckabhängig oder/und temperaturabhängig eine Strömungsverbindung vom dem Gehäuseinnenraum (26) zu der Umgebung bereitstellende Abschlussanordnung (71) vorgesehen ist.

2. Batteriegehäuse nach Anspruch 1,
**dadurch gekennzeichnet, dass** der Gehäuserahmen (20) zwei Paare von zueinander jeweils im Wesentlichen parallel verlaufenden und eine im Wesentlichen rechteckige Umfangsstruktur des Gehäuserahmens (20) bildenden Rahmenelementen (36, 38, 40, 42) umfasst, und dass in wenigstens einem der als Hohlprofilteile ausgebildeten Rahmenelemente (36, 38, 40) wenigstens ein Strömungskanal (64, 88) ausgebildet ist.

3. Batteriegehäuse nach Anspruch 1 oder 2,
**dadurch gekennzeichnet, dass** die Abschlussanordnung (71) umfasst:
- in Zuordnung zu wenigstens einer Innenöffnung (70; 70"; 70‴), vorzugsweise jeder Innenöffnung (70; 70"; 70‴), eine druckabhängig oder/ und temperaturabhängig eine Strömungsverbindung zwischen dem Gehäuseinnenraum (26) und dem wenigstens einen Strömungskanal (64) bereitstellende Innen-Abschlussanordnung (72; 72"; 72‴),
oder/und
- in Zuordnung zu wenigstens einer Außenöffnung (74'), vorzugsweise jeder Außenöffnung (74'), eine druckabhängig oder/und temperaturabhängig eine Strömungsverbindung zwischen dem wenigstens einen Strömungskanal (64) und der Umgebung bereitstellende Außen-Abschlussanordnung (72').

4. Batteriegehäuse nach Anspruch 3,
**dadurch gekennzeichnet, dass** wenigstens eine Innen-Abschlussanordnung (72; 72"; 72‴), vorzugsweise jede Innen-Abschlussanordnung (72; 72"; 72‴), die Strömungsverbindung zwischen dem Gehäuseinnenraum (26) und dem wenigstens einen Strömungskanal (64, 88) bei Überschreiten eines Grenzdrucks im Gehäuseinnenraum (26) freigibt, oder/und dass wenigstens eine Außen-Abschlussanordnung (72'; 72"; 72‴), vorzugsweise jede Außen-Abschlussanordnung (72'; 72"; 72‴), die Strömungsverbindung zwischen dem wenigstens einen Strömungskanal (64, 88) und der Umgebung bei Überschreiten eines Grenzdrucks im Strömungskanal (64) freigibt,
vorzugsweise wobei wenigstens eine Innen-Abschlussanordnung (72; 72"; 72‴), vorzugsweise jede Innen-Abschlussanordnung (72), ein die Strömungsverbindung zwischen dem Gehäuseinnenraum (26) und dem wenigstens einen Strömungskanal (64, 88) bei Überschreiten des Grenzdrucks im Gehäuseinnenraum (26) freigebendes Ventil umfasst, oder/und dass wenigstens eine Außen-Abschlussanordnung (72'), vorzugsweise jede Außen-Abschlussanordnung (72'), ein die Strömungsverbindung zwischen dem wenigstens einen Strömungskanal (64) und der Umgebung bei Überschreiten des Grenzdrucks in dem wenigstens einen Strömungskanal (64) freigebendes Ventil umfasst
oder
vorzugsweise wobei wenigstens eine Innen-Abschlussanordnung (72; 72"; 72‴), vorzugsweise jede Innen-Abschlussanordnung (72; 72"; 72‴), ein die Strömungsverbindung zwischen dem Gehäuseinnenraum (26) und dem wenigstens einen Strömungskanal (64, 88) bei Überschreiten des Grenzdrucks im Gehäuseinnenraum (26) freigebendes Berstelement umfasst, oder/ und dass wenigstens eine Außen-Abschlussanordnung (72'), vorzugsweise jede Außen-Abschlussanordnung (72'), ein die Strömungsverbindung zwischen dem wenigstens einen Strömungskanal (64) und der Umgebung bei Überschreiten des Grenzdrucks in dem wenigstens einen Strömungskanal (64) freigebendes Berstelement umfasst.

5. Batteriegehäuse nach einem der Ansprüche 3 oder 4,
**dadurch gekennzeichnet, dass** wenigstens eine Innen-Abschlussanordnung (72, 72"; 72‴), vorzugsweise jede Innen-Abschlussanordnung (72, 72"; 72‴), die Strömungsverbindung zwischen dem Gehäuseinnenraum (26) und dem wenigstens einen Strömungskanal (64, 88) bei Überschreiten einer Grenztemperatur im Gehäuseinnenraum (26) freigibt, oder/und dass wenigstens eine Außen-Abschlussanordnung (72'), vorzugsweise jede Außen-Abschlussanordnung (72'), die Strömungsverbindung zwischen dem wenigstens einen Strömungskanal (64) und der Umgebung bei Überschreiten einer Grenztemperatur in dem wenigstens einen Strömungskanal (64) freigibt,
vorzugsweise wobei wenigstens eine Innen-Abschlussanordnung (72; 72"; 72"'), vorzugsweise jede Innen-Abschlussanordnung (72; 72"; 72‴), ein die Strömungsverbindung zwischen dem Gehäuseinnenraum (26) und dem wenigstens einen Strömungskanal (64, 88) bei Überschreiten der Grenztemperatur im Gehäuseinnenraum (26) freigebendes Schmelzelement umfasst, oder/und dass wenigstens eine Außen-Abschlussanordnung (72'), vorzugsweise jede Außen-Abschlussanordnung (72'), ein die Strömungsverbindung zwischen dem Strömungskanal (64) und der Umgebung bei Überschreiten der Grenztemperatur in dem wenigstens einen Strömungskanal (64) freigebendes Schmelzelement umfasst.

6. Batteriegehäuse nach einem der Ansprüche 1-5,
**dadurch gekennzeichnet, dass** wenigstens ein Strömungskanal (64) wenigstens einen Kanalabschnitt (66, 68, 84), vorzugsweise einen einzigen Kanalabschnitt (66), umfasst.

7. Batteriegehäuse nach einem der Ansprüche 1-6,
**dadurch gekennzeichnet, dass** wenigstens ein Strömungskanal (64, 88) wenigstens zwei aneinander anschließende, in zueinander unterschiedlichen Strömungsrichtungen durchströmbare Kanalabschnitte (66, 68, 84, 88', 88") umfasst,
vorzugsweise wobei die wenigstens zwei Kanalabschnitte (66, 68, 84, 88', 88") in zueinander im Wesentlichen entgegengesetzten Strömungsrichtungen durchströmbar sind.

8. Batteriegehäuse nach Anspruch 6 oder 7,
**dadurch gekennzeichnet, dass** einer der Kanalabschnitte (66, 68, 84) über die wenigstens eine Innenöffnung (70; 70') in Strömungsverbindung mit dem Gehäuseinnenraum (26) steht oder bringbar ist und ein anderer der Kanalabschnitte (66, 68, 84) über die wenigstens eine Außenöffnung (74; 74') in Strömungsverbindung mit der Umgebung steht oder bringbar ist.

9. Batteriegehäuse nach einem der Ansprüche 1-8,
**dadurch gekennzeichnet, dass** wenigstens ein als Hohlprofilteil ausgebildetes und wenigstens einen Strömungskanal (64) bereitstellendes Rahmenelement (36, 38, 40), vorzugsweise jedes als Hohlprofilteil ausgebildetes und wenigstens einen Strömungskanal (64) bereitstellendes Rahmenelement (36, 38, 40), als Blechumformteil ausgebildet ist.

10. Batteriegehäuse nach einem der Ansprüche 1-9,
**dadurch gekennzeichnet, dass** wenigstens eine Innenöffnung (70; 70'; 70"; 70‴), vorzugsweise jede Innenöffnung (70; 70'; 70"; 70"'), in einem als Hohlprofilteil ausgebildeten Rahmenelement (36, 38, 40) ausgebildet ist, oder/ und dass wenigstens eine Außenöffnung (74; 74'; 74"; 74‴), vorzugsweise jede Außenöffnung (74; 74'; 74"; 74‴), in einem als Hohlprofilteil ausgebildeten Rahmenelement (36, 38, 40) ausgebildet ist.

11. Batteriegehäuse nach einem der Ansprüche 1-10,
**dadurch gekennzeichnet, dass** in dem Gehäuseinnenraum (26) eine mit dem Gehäuserahmen (20) verbundene Trägerstruktur (44) zur Aufnahme einer Mehrzahl von Batteriezellen (24) angeordnet ist.

12. Batteriegehäuse nach Anspruch 11,
**dadurch gekennzeichnet, dass** die Trägerstruktur (44) wenigstens ein als Hohlprofilteil ausgebildetes Trägerelement (46, 48, 50) umfasst, und dass in wenigstens einem als Hohlprofilteil ausgebildeten Trägerelement (50) wenigstens ein Strömungskanal (90) ausgebildet ist, wobei der wenigstens eine in dem wenigstens einen als Hohlprofilteil ausgebildeten Trägerelement (50) ausgebildete Strömungskanal (90) über wenigstens eine Innenöffnung (70‴) in Strömungsverbindung mit dem Gehäuseinnenraum (26) steht oder bringbar ist,
vorzugsweise wobei wenigstens eine Innenöffnung (70‴), vorzugsweise jede Innenöffnung (70‴), in einem als Hohlprofilteil ausgebildeten Trägerelement (50) ausgebildet ist.

13. Batteriegehäuse nach Anspruch 12,
**dadurch gekennzeichnet, dass** der in dem wenigstens einen als Hohlprofilteil ausgebildeten Trägerelement (50) ausgebildete Strömungskanal (90) in Strömungsverbindung mit wenigstens einem in wenigstens einem als Hohlprofilteil ausgebildeten Rahmenelement (36, 38, 40) ausgebildeten Strömungskanal (66, 88) steht, und dass wenigstens ein in einem als Hohlprofilteil ausgebildeten Rahmenelement (36, 38, 40) ausgebildeter Strömungskanal (66, 88) über wenigstens eine Außenöffnung (74", 74‴) in Strömungsverbindung mit der Umgebung um das Batteriegehäuse (14) herum steht oder bringbar ist.

14. Batteriebaugruppe, insbesondere für ein elektrisch betriebenes Fahrzeug, umfassend ein eine Mehrzahl von Batteriezellen (24) enthaltendes Batteriegehäuse (14) nach einem der Ansprüche 1-13.

15. Elektrisch betriebenes Fahrzeug, umfassend eine Batteriebaugruppe nach Anspruch 14.
